# EUROPÄISCHE PATENTSCHRIFT

(11) **EP 2 121 281 B1**
(45) Veröffentlichungstag und Bekanntmachung des Hinweises auf die Patenterteilung: **21.04.2010**
(21) Anmeldenummer: 07856235.2
(22) Anmeldetag: 23.11.2007
(51) Int. Cl.: B29C 47/68

(54) **SCHMELZEFILTER**
MELT FILTER
FILTRE POUR MATIÈRES EN FUSION

(30) Priorität: 28.11.2006 DE 102006056471
(43) Veröffentlichungstag der Anmeldung: 25.11.2009
(73) Patentinhaber: Gneuss Kunststofftechnik GmbH, 32549 Bad Oeynhausen (DE)
(72) Erfinder: GNEUSS, Detlef, 32545 Bad Oeynhausen (DE)
(74) Vertreter: Grosse, Wolf-Dietrich Rüdiger
(86) Internationale Anmeldenummer: PCT/EP2007/010201
(87) Internationale Veröffentlichungsnummer: WO 2008/064833

(56) Entgegenhaltungen:
- DE-A1- 4 212 928
- DE-A1- 10 358 672
- US-A- 3 817 377
- US-B1- 6 325 922

## Beschreibung

Die Erfindung betrifft einen Schmelzefilter für die Reinigung von insbesondere von Extrudern abgegebenen Kunststoffschmelzen, mit einem Gehäuse welches einen, einen Schmelzeeinlauf und einen Schmelzeauslauf verbindenden Schmelzkanal aufweist, wobei im Schmelzkanal eine mittels eines kraftbetriebenen Klinikenantriebs drehantreibbar vorgesehene Siebscheibe angeordnet ist, die entlang einer Kreisbahn durch Stege getrennte Ausnehmungen zur Aufnahme austauschbarer Filtersiebe aufweist, und wobei das Gehäuse eine Filterelement-Wechselstation aufweist.

Derartige Schmelzefilter gehören z. B. durch die DE 103 58 672 A1 zum Stand der Technik. Sollen große Mengen zu reinigender Schmelze gefiltert werden, so stoßen die Filterelemente der Siebscheiben bezüglich ihrer baulichen Größe an Grenzen. Die Filterelemente müssen dem Druck der vom Extruder gelieferten Kunststoffschmelze standhalten. Dabei können sie nicht beliebig vergrößert werden da sie, bei steigender Filterfläche auch dicker werden müssten um dem Druck standhalten zu können. Bei den zurzeit auf dem Markt befindlichen Filterelementen für derartige Siebscheiben ist das Verhältnis der Siebfläche zur Siebdicke optimiert. Soll mehr als die maximal mögliche Menge an Kunststoffschmelze gefiltert werden, muss ein zweiter oder müssen weitere Schmelzefilter vorgesehen werden. Die weiteren Schmelzefilter sind kostenaufwendig, beanspruchen zudem erheblichen Platz, sowie weitere Steuerungen, weitere Energie usw.

Der Erfindung liegt die Aufgabe zugrunde, einen gattungsgemäßen Schmelzefilter derart auszubilden, dass große Mengen zu filternde Schmelze kostengünstig, energiesparend und Platz sparend gefiltert werden können.

Zur Lösung der Aufgabe wird vorgeschlagen, dass das Gehäuse mindestens zwei Schmelzeinläufe aufweist, die über mindestens zwei Schmelzekanäle mit dem Schmelzauslauf verbunden sind und dass in jedem Schmelzekanal eine mittels mindestens eines kraftbetriebenen Klinkenantriebes drehantreibbare Siebscheibe vorgesehen ist, und dass jeder Siebscheibe eine Filterelement-Wechselstation zugeordnet ist.

Durch die Vermehrfachung der Schmelzeeinläufe und der dahinter angeordneten Siebscheiben lässt sich mit dem einen Schmelzefilter die mehrfache Menge der zu filternden Schmelze filtern, ohne dass wesentlich mehr Platz für das Gehäuse, die Steuerung und die Filterelement-Wechselstationen benötigt wird. Der kompakte Aufbau gewährleistet zudem, dass kaum mehr Energie als beim gattungsgemäßen Schmelzefilter und erheblich weniger Energie als bei einem mehrfachen Einsatz von gattungsgemäßen Schmelzefiltern zum Heizen des Filters benötigt wird.

Von Vorteil ist, dass das Gehäuse zwei Einlaufblöcke und einen Auslaufblock aufweist, wobei zwischen den beiden Einlaufblöcken und dem Auslaufblock jeweils eine Siebscheibe angeordnet ist und sich der Schmelzekanal der Einlaufblöcke vom Schmelzeeinlauf zur Siebscheibe hin erweitert.

Gegenüber der Verwendung mehrerer Schmelzefilter lassen sich bei diesem kompakten Filter an nur einen Auslaufblock mindestens zwei Einlaufblöcke anordnen, so dass beim Vorsehen von zwei Einlaufblöcken und zwei Siebscheiben zumindest ein Auslaufblock eingespart wird, wodurch sowohl Platz als auch Kosten eingespart werden.

Werden die Siebscheiben im Gehäuse im Wesentlichen parallel zueinander angeordnet, so ergeben sich besonders günstige Platz- und Druckverhältnisse.

Obwohl selbstverständlich jeder Siebscheibe ein eigener Klinkenantrieb zugeordnet sein kann ist es besonders zweckmäßig, wenn die die Siebscheiben antreibenden Klinken einen gemeinsamen Klinkenantrieb aufweisen. Dadurch wird lediglich eine Steuerung für den Antrieb beider Siebscheiben notwendig. Hinzu kommt, dass eine Antriebsvorrichtung eingespart wird, wodurch die Anlagenkosten minimiert werden können.

Bemerkenswert ist, dass im Auslaufblock, vom Auslauf- Schmelzekanal abgezweigt, mindestens je ein Rückspülkanal für jede Siebscheibe vorgesehen ist, und dass dem Rückspülkanal gegenüberliegend Rückspülausläufe in den Einlaufblöcken angeordnet sind.

Durch das Vorsehen einer Rückspülmöglichkeit für jede der Siebscheiben lassen sich die Wechselintervalle der Filterelemente erheblich vergrößern.

Nachahmenswert ist, dass jeder Einlaufblock die an ihn angrenzende Siebscheibe vollständig abdeckt, wobei die Abdeckung lediglich durch die Filterelementwechselstation unterbrochen ist.

Durch die annähernd vollständige Abdeckung der Siebscheiben gelangt möglichst wenig Luft an die Siebscheiben, so dass dem Kunststoff kaum Chancen gegeben werden zu kracken.

Sind die Filterelement-Wechselstationen durch Klappen verschließbar, so kann noch weniger Luft an die Siebscheiben gelangen. Durch die Rückspülmöglichkeit lassen sich die Öffnungsintervalle der Klappen vergrößern.

Zweckmäßig ist jede Filterelement-Wechselstation größer als ein Filterelement aber kleiner oder gleich groß der Größe zweier Filterelemente.

Durch diese gewählte möglichst minimale Größe der Filterelement-Wechselstation wird ebenfalls gewährleistet, dass möglichst wenig Luft an die Schmelze gelangt.

### Die Erfindung wird anhand einer Zeichnung näher erläutert. Dabei zeigt

- Figur 1: den Schnitt durch ein erfindungsgemäßes Filterelement, während
- Figur 2: die Ansicht A und
- Figur 3: die Ansicht B des Filterelementes darstellen.

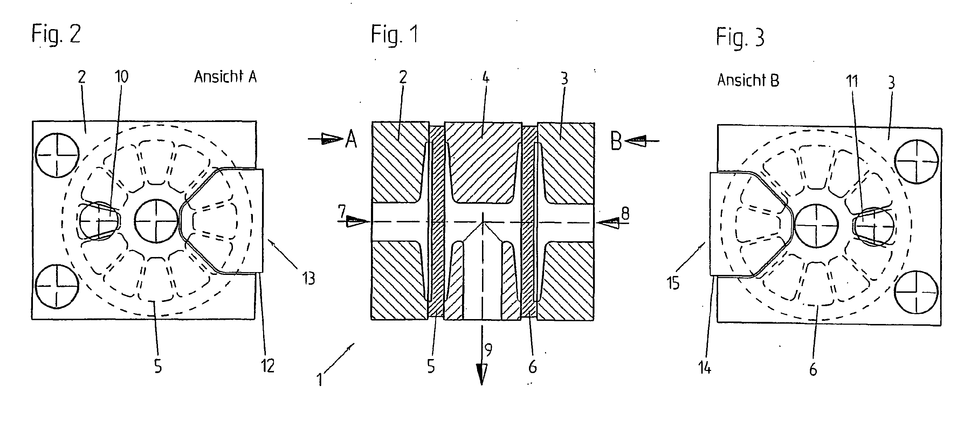

Fig. 1 zeigt das Gehäuse 1 eines Schmelzefilters, welches aus einem Einlaufblock 2 einem Einlaufblock 3 sowie einem Auslaufblock 4 und einer zwischen dem Einlaufblock 2 und dem Auslaufblock 4 angeordneten Siebscheibe 5 sowie einer zwischen dem Einlaufblock 3 und dem Auslaufblock 4 angeordnete Siebscheibe 6 gebildet ist. Der Einlaufblock 2 weist einen Schmelzeeinlauf 7 auf während der Einlaufblock 3 einen Schmelzeeinlauf 8 besitzt. Der Auslaufblock 4 weist einen Schmelzeauslauf 9 auf. Der sich vom Schmelzeeinlauf 7 bis zur Siebscheibe 5 erstreckende Schmelzekanal 10 erweitert sich zur Siebscheibe 5 hin während der Schmelzekanal 11 sich vom Schmelzeeinlauf 8 zur Siebscheibe 6 hin erweitert. Die Siebscheiben 5 und 6 sind im Wesentlichen parallel zueinander angeordnet und können mittels eines nicht gezeigten vorzugsweise gemeinsamen Klinkenantrieb drehbewegt werden.

Die Fig. 2 zeigt den Einlaufblock 2 mit dahinter angeordneter Siebscheibe 5 und dem Schmelzekanal 10. Weiterhin ist die Filterelement-Entnahmeklappe 12 zu erkennen, welche eine Filterelement-Wechselstation 13 abdeckt und verschließt.

Die Fig. 3 zeigt dagegen den Einlaufblock 3 mit der dahinter angeordneten Siebscheibe 6 und dem Schmelzekanal 11 sowie der Filterelement-Entnahmeklappe 14, welche eine Filterelement-Wechselstation 15 abdeckt und verschließt.

### Bezugszeichenliste

1. Gehäuse
2. Einlaufblock
3. Einlaufblock
4. Auslaufblock
5. Siebscheibe
6. Siebscheibe
7. Schmelzeeinlauf
8. Schmelzeeinlauf
9. Schmelzeaüslauf
10. Schmelzekanal
11. Schmelzekanal
12. Filterelement-Entnahmeklappe
13. Filterelement-Wechselstation
14. Filterelement-Entnahmeklappe
15. Filterelement-Wechselstation

## Patentansprüche

1. Schmelzefilter für die Reinigung von insbesondere von Extrudern abgegebenen Kunststoffschmelzen mit einem Gehäuse (1) welches einen, einen Schmelzeeinlauf (7) und einen Schmelzeauslauf (9) verbindenden Schmelzekanal (10) aufweist, wobei im Schmelzekanal (10) eine mittels eines kraftbetriebenen Klinkenantriebs drehantreibbar vorgesehene Siebscheibe (5) vorgesehen ist, die entlang einer Kreisbahn durch Stege getrennte Ausnehmungen zur Aufnahme austauschbarer Filterelemente aufweist, und wobei das Gehäuse (1) eine Filterelement-Wechselstation (13) aufweist,
**dadurch gekennzeichnet,**
**dass** das Gehäuse mindestens zwei Schmelzeeinläufe (7, 8) aufweist, die über mindestens zwei Schmelzekanäle (10, 11) mit dem Schmelzeauslauf (9) verbunden sind und dass in jedem Schmelzekanal (10, 11) eine mittels mindestens eines kraftbetriebenen Klinkenantriebs drehantreibbare Siebscheibe (5, 6) vorgesehen ist und dass jeder Siebscheibe (5, 6) eine Filterelement-Wechselstation (13, 15) zugeordnet ist.

2. Schmelzefilter (1) nach Anspruch 1,
**dadurch gekennzeichnet,**
**dass** das Gehäuse (1) mindestens zwei Einlaufblöcke (2, 3) und einen Auslaufblock (4) aufweist, wobei zwischen den beiden Einlaufblöcken (2, 3) und dem Auslaufblock (4) jeweils eine Siebscheibe (5, 6) angeordnet ist und der Schmelzekanal (10, 11) sich vom Schmelzeeinlauf (7, 8) zur Siebscheibe (5, 6) hin erweitert.

3. Schmelzefilter nach Anspruch 2,
**dadurch gekennzeichnet,**
**dass** die Siebscheiben (5, 6) im Gehäuse (1) im Wesentlichen parallel zueinander angeordnet sind.

4. Schmelzefilter nach Anspruch 3,
**dadurch gekennzeichnet,**
**dass** die, die Siebscheiben (5, 6) antreibenden Klinken einen gemeinsamen Klinkenantrieb aufweisen.

5. Schmelzefilter nach einem der Ansprüche 1 bis 4,
**dadurch gekennzeichnet,**
**dass** im Auslaufblock (4), vom Auslauf-Schmelzekanal abgezweigt, mindestens je ein Rückspülkanal für jede Siebscheibe (5, 6) angeordnet ist, und das jedem Rückspülkanal gegenüberliegend Rückspülausläufe in den Einlaufblöcken (2, 3) vorgesehen sind.

6. Schmelzefilter nach einem der Ansprüche 1 bis 5,
**dadurch gekennzeichnet,**
**dass** jeder Einlaufblock (2, 3) die an ihn angrenzenden Siebscheiben (5, 6) vollends abdeckt und lediglich durch die Filterelement-Wechselstation (13, 15) unterbrochen ist.

7. Schmelzefilter nach Anspruch 6,
**dadurch gekennzeichnet,**
**dass** jede Filterelement-Wechselstation (13, 15) durch Filterelement- Entnahmeklappen (12, 14) verschließbar ist.

8. Schmelzefilter nach Anspruch 6 oder 7,
**dadurch gekennzeichnet,**
**dass** jede Filterelement-Wechselstation (13, 15) größer als ein Filterelement und kleiner oder gleich groß der Größe zweier Filterelemente ausgebildet ist.

## Claims

1. Melt filter for the purification of plastic melts discharged, in particular, from extruders, with a housing (1) which comprises a melt channel (10) connecting a melt inlet (7) and a melt outlet (9), a filter disc (5) being provided in the melt channel (10) which filter disc is provided to be able to be driven in rotation by means of a power-operated ratchet drive, which comprises recesses along a circular path separated by webs for receiving exchangeable filter elements, and the housing (1) comprising a filter element-changing station (13),
**characterised in that**
the housing comprises at least two melt inlets (7, 8), which are connected via at least two melt channels (10, 11) to the melt outlet (9), and **in that** a filter disc (5, 6) is provided in each melt channel (10, 11) which filter disc may be driven in rotation by means of at least one power-operated ratchet drive, and **in that** one filter element-changing station (13, 15) is associated with each filter disc (5, 6).

2. Melt filter (1) according to Claim 1,
**characterised in that**
the housing (1) has at least two inlet blocks (2, 3) and one outlet block (4), one respective filter disc (5,6) being arranged between the two inlet blocks (2, 3) and the outlet block (4) and the melt channel (10, 11) widening from the melt inlet (7, 8) towards the filter disc (5, 6).

3. Melt filter according to Claim 2,
**characterised in that**
the filter discs (5, 6) are arranged substantially parallel to one another in the housing (1).

4. Melt filter according to Claim 3,
**characterised in that**
the ratchets driving the filter discs (5, 6) have a common ratchet drive.

5. Melt filter according to one of Claims 1 to 4,
**characterised in that**
in the outlet block (4), branched off from the outlet melt channel, at least one respective backflush channel is arranged for each filter disc (5, 6), and that backflush outlets opposing each backflush channel are provided in the inlet blocks (2, 3).

6. Melt filter according to one of Claims 1 to 5,
**characterised in that**
each inlet block (2, 3) completely covers the filter discs (5, 6) adjacent thereto and is only interrupted by the filter element-changing station (13, 15).

7. Melt filter according to Claim 6,
**characterised in that**
each filter element-changing station (13, 15) is able to be closed by filter element-removal flaps (12, 14).

8. Melt filter according to Claim 6 or 7,
**characterised in that**
each filter element-changing station (13, 15) is configured to be larger than a filter element and smaller than or the same dimension as the size of two filter elements.

## Revendications

1. Filtre pour matières en fusion pour le nettoyage de matières plastiques en fusion, déposées en particulier par des extrudeuses, avec un boîtier (1) comportant un canal de matières en fusion (10) reliant une entrée de matières en fusion (7) et une sortie de matières en fusion (9), un disque de filtrage (5) apte à être entraîné par rotation, au moyen d'un entraînement à cliquet lui-même entraîné par moteur, étant prévu dans le canal de matières en fusion (10) et comportant des évidements séparés par des branches, le long d'une voie circulaire, pour l'admission d'éléments de filtre interchangeables, et le boîtier (1) comportant une station de remplacement d'élément de filtre (13),
**caractérisé en ce que**
le boîtier comporte au moins deux entrées de matières en fusion (7, 8), reliées à la sortie de matières en fusion (9) par le biais d'au moins deux canaux de matières en fusion (10, 11), et **en ce qu'**un disque de filtrage (5, 6) entraîné par rotation au moyen d'au moins un entraînement à cliquet, lui-même entraîné par moteur, est prévu dans chacun des canaux de matières en fusion (10, 11), et **en ce qu'**une station de remplacement d'élément de filtre (13, 15) est attribué à chacun des disques de filtrage (5, 6).

2. Filtre de matières en fusion (1) selon la revendication 1,
**caractérisé en ce que**
le boîtier (1) comporte au moins deux blocs d'entrée (2, 3) et un bloc de sortie (4), un disque de filtrage (5, 6) étant disposé entre chacun des deux blocs d'entrée (2, 3) et le bloc de sortie (4), et le canal de matières en fusion (10, 11) s'élargit à partir de l'entrée de matières en fusion (7, 8) jusqu'au disque de filtrage (5, 6).

3. Filtre de matières en fusion selon la revendication 2,
**caractérisé en ce que**
les disques de filtrage (5, 6) dans le boîtier (1) sont disposés essentiellement parallèlement l'un par rapport à l'autre.

4. Filtre de matières en fusion selon la revendication 3,
**caractérisé en ce que**
les cliquets entraînant les disques de matières en fusion (5, 6) comportent un entraînement à cliquet commun.

5. Filtre de matières en fusion selon l'une des revendications 1 à 4,
**caractérisé en ce que**
dans le bloc de sortie (4), partant du canal de sortie de matières en fusion, se trouve au moins un canal de reflux pour chacun des disques de filtrage (5, 6), et **en ce qu'**à chaque canal de reflux sont attribuées des sorties de reflux opposées dans les blocs d'entrée (2, 3).

6. Filtre de matières en fusion selon l'une des revendications 1 à 5,
**caractérisé en ce que**
chaque bloc d'entrée (2, 3) recouvre entièrement les disques de filtrage (5, 6) qui le bordent, en étant interrompus seulement par la station de remplacement d'éléments de filtre (13, 15).

7. Filtre de matières en fusion selon la revendication 6,
**caractérisé en ce que**
chaque station de remplacement d'élément de filtre (13, 15) peut être fermée par des clapets de retrait d'élément de filtre (12, 14).

8. Filtre de matières en fusion selon l'une des revendications 6 ou 7,
**caractérisé en ce que**
chaque station de remplacement d'élément de filtre (13, 15) présente une taille supérieure à un élément de filtre, ou inférieure ou égale à la taille de deux éléments de filtre.
